# EUROPEAN PATENT SPECIFICATION

(11) **EP 3 005 973 B1**
(45) Date of publication and mention of the grant of the patent: **18.03.2020**
(21) Application number: 14741992.3
(22) Date of filing: 06.06.2014
(51) Int. Cl.: A61C 8/00

(54) **SYSTEM WITH DENTAL IMPLANT AND ASSYMETRIC ABUTMENT**
SYSTEM MIT ZAHNIMPLANTAT UND ASSYMETRISCHEM AUFBAUPFOSTEN
SYSTÈME AVEC IMPLANT DENTAIRE ET PILIER ASYMÉTRIQUE

(30) Priority: 07.06.2013 PT 10699513
(43) Date of publication of application: 13.04.2016
(73) Proprietor: Seguro Dias, Gonçalo Pires Antunes, 1250-098 Lisboa (PT)
(72) Inventor: Seguro Dias, Gonçalo Pires Antunes, 1250-098 Lisboa (PT)
(74) Representative: Miranda de Sousa, João Paulo Vaz
(86) International application number: PCT/PT2014/000038
(87) International publication number: WO 2014/196884

(56) References cited:
- WO-A1-2006/084346
- DE-U1-202012 102 746
- US-A1- 2012 045 735
- US-A1- 2012 264 081
- US-B1- 6 244 868

## Description

### Field of the invention

The present invention refers to the field of prosthetic supplements for dental implants, in particular to systems of prosthetic supplements for dental implants including an implant support and an implant pillar.

The present invention further refers to the preferred use of the system of prosthetic supplements for dental implants and to a method of use of such a type of system of prosthetic supplements for dental implants.

### Background of the invention

When considering the extraction of a tooth and placement of an implant in a respective dental alveolus, there is the issue of the conditions more favorable to the recovery of the soft and hard biologic tissues affected by such intervention, in particular in the zone of the alveolar crest, and the creation of favorable conditions to a subsequent placement of prosthetic crown in said implant. This purpose has particular application in the so-called immediate implants, where a prosthetic crown is applied immediately after the placement of a respective implant. This type of implants presents several advantages, including in terms of minimizing the associated interventions and discomfort.

There are several solutions already known in prior art that disclose emerging profile configurations of an implant pillar. Examples include the documents WO 2006/138353 A2, WO 2010/141342 A2 and WO 2012/158769 A1.

Document US 6,244,868 B1 discloses an integrated guided-tissue regeneration barrier for root-form dental implants, and is generally related to the use of mechanical barriers, in particular in the form of an absorbable circumferential membrane, and to the certain materials, in particular titanium mesh, collagen or synthetic polymer. The document shows a free alveolar space below the membrane around the implant.

Document DE 20 2012 102746 U1 discloses a system of prosthetic implants with an implant pillar comprising an emergent asymmetric profile that extends above the implant.

Document US 2012/264081 A1 relates to healing abutment system that uses an anatomically shaped bone graft contouring abutment in place of a conventional healing abutment to control the bone graft for optimal height. The healing abutment comprises an emergent profile presenting a curved configuration.

Document WO 2006/084346 A1 discloses a dental implant system comprising an, implant support an implant pillar and a collar member having a curved profile.

However, all of these documents refer only to the evolution of such an emerging profile above of the alveolar crown. None of the prior art documents addresses the problem of providing the dental implant in view of promoting the conditions of rapid healing, in particular resulting from the development of alveolar clot, not being therefore suited for immediate implants; only for implants placed in already healed bone crests.

### Summary description of the invention

The goal of the present invention is to provide a system of prosthetic supplements for dental implants, in particular preferentially comprising a plurality of dental implants that present a respective implant support and implant pillar for application of a prosthetic crown, or similar device, that provides better recovery conditions of the soft and hard tissues of the implant alveolus, in particular promoting better clot development conditions inside of the implant alveolus.

This goal is attained according to the present invention by means of a system of prosthetic supplements for dental implants that present an implant support and an implant pillar, as defined in claim 1, provided so that they engage each other and engage in a respective dental alveolus, in particular configured with a cross section of smaller dimension than the alveolar section of said dental alveolus, and are disposed on said dental alveolus so that, when executing a respective assembly and placement, there remains a free alveolar space in the implant alveolus that develops preferentially in a substantially continuous manner on the exterior side of the dental alveolus with reference to the mouth cavity, in particular along at least part of a respective alveolus wall.

According to a particular embodiment, the implant support and the implant pillar are configured and disposed so that said free alveolar space correspond to at least a fraction, preferentially a fraction of laminar form of the dental alveolus, and extends along at least part, preferentially most part of the alveolus wall, particularly preferred until the zone of the alveolar crest, and is closed relative to the outside. In fact, it has been verified that this free alveolar space favors clot development and, therefore, promotes a faster healing of the dental alveolus after placing the implant.

According to another aspect, the implant support is provided so that the respective support base results in engagement with the base of the dental alveolus and the support top results somewhat below of the bone crest of the dental alveolus, preferentially at a distance between 1 mm and 4 mm, particularly preferred at about 2 mm, being in this case disposed preferentially relative to the cross section of the dental alveolus so as to provide said free alveolar space. The implant support thus ensure a reliable fixation of the implant to the bone structure of alveolar surround, while simultaneously providing free alveolar space that is favorable to a more rapid recovery of the bone and soft tissues after placement of the implant.

According to another aspect, the implant pillar presents an emerging profile configured so as to minimize the zone of interaction with the edge of alveolar crest, while thereby closing said free alveolar space. According to a preferred embodiment, the implant pillar presents an emerging profile configured so as to maximize the free alveolar space in the proximity of the alveolar crest while thereby closing said free alveolar space.

According to another aspect, the emerging profile is configured so as to sit in surface and/or minimal pressure at least in the perimeter part of the alveolar crest that is on the exterior side with relation to the mouth cavity, while simultaneously ensuring a sufficient proximity to thereby close the free alveolar space relative to the exterior of the dental alveolus.

According to the invention, the implant pillar presents an emerging profile with a contour including a first profile zone provided in a concave configuration, and a second profile zone provided in a convex configuration in relation to the alveolar wall, so that the interaction with the edge of the alveolar crest is done, at least in most of its extension, by the convex zone of the emerging profile, said implant pillar further presents an emerging profile that develops along an extension (x) and a height (y), whereby the dimensions and/or the relation between the extension (x) and the height (y) of the emerging profile are determined as a function of the dimension and/or of the type of respective dental alveolus, the relation between the extension (x) and the height (y) of the emerging profile being in the interval from 0,5:1 up to 1:1.

According to the invention, the first and second zones of the emerging profile are provided in a continuous curved configuration and the implant pillar presents an emerging profile that develops along at least most part of the exterior surface of the base element, and along at least most part of half the cross section of the base element. The base of pillar presents an asymmetric cross section, with the emerging profile developing along at least most part of half the perimeter thereof. According to a preferred embodiment, the implant pillar presents a base element and a retention element adapted for engagement with an implant crown, whereby the base element presents said emerging profile in at least part of its side face.

In an other configuration the system of prosthetic supplements for dental implants may comprise a plurality of elements or models of previously defined configurations and dimensions in view of thereby corresponding to the needs of at least the majority of the cases of dental alveolus after extraction. This goal is solved by means of at least two, preferentially at least four models of prosthetic supplements for dental implants that present different dimensions of implant supports and/or of implant bases, including respective emerging profiles, configured and dimensioned so that they can be used with the generality of the dimensions and/or types of dental alveolus at least for a given age group of a given animal species. According to a preferred embodiment, the system of dental implants is provided in form of sets of kits adequate for use in implants, regardless of whether immediate or not, in respectively representative dental alveolus.

According to a preferred embodiment, the implant pillar is produced in a single piece, preferentially by means of molding or tridimensional milling. According to another preferred embodiment, the implant pillar is produced in zirconium, or material presenting similar physical and chemical proprieties.

### List of figures

The invention shall hereinafter be explained in more detail based upon preferred embodiments and the attached Figures.

The Figures show:
- Figure 1:: schematic representation in side view, in a view partially in cut, of an embodiment of a system (1) of prosthetic supplements for dental implants according to the invention (prosthetic version where the pillar and the crown are two components);
- Figure 2:: schematic representation in top view of an embodiment of a system (1) of prosthetic supplements for dental implants according to the invention;
- Figure 3:: schematic representation in front cut view, of a dental alveolus (2) with an embodiment of a system (1) of prosthetic supplements for dental implants according to the invention (prosthetic supplement version for immediate use of a prosthetic crown);
- Figure 4:: schematic representation in side view and in top view (bottom) of a plurality of a system (1) of prosthetic supplements for dental implants according to the present invention;
- Figure 5:: schematic representation in front cut view of a dental alveolus (2) with an embodiment of a system (1) of prosthetic supplements for dental implants according to the invention (prosthetic supplement version for use without immediate placement of a crown);
- Figure 6:: schematic representations in side view and in top view (bottom), of a plurality of units of a system (1) of prosthetic supplements for dental implants according to the present invention;
- Figure 7:: schematic representation in a partially in cut side view of an embodiment of system (1) of prosthetic supplements for dental implants according to the invention (prosthetic version where the pillar and the crown are a single component);
- Figure 8:: schematic representation in top view of an embodiment of a system (1) of prosthetic supplements for dental implants according to the invention.

### Description of preferred embodiments of the invention

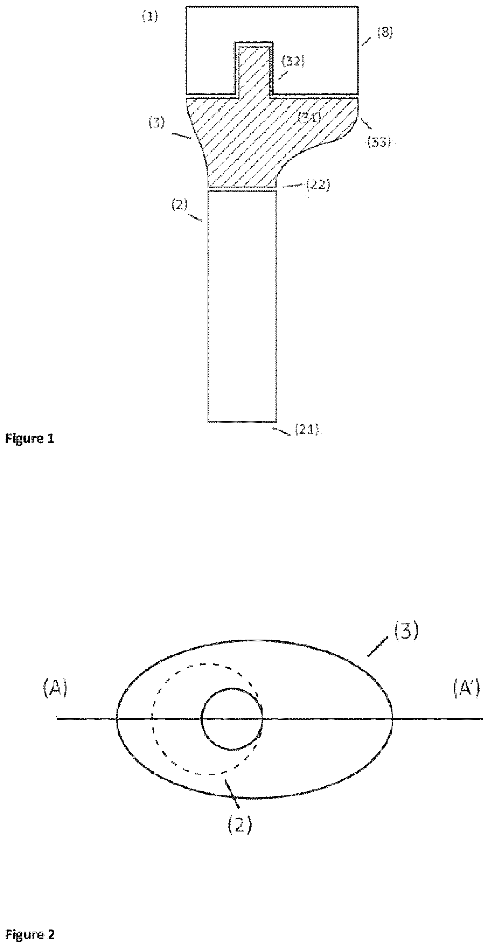

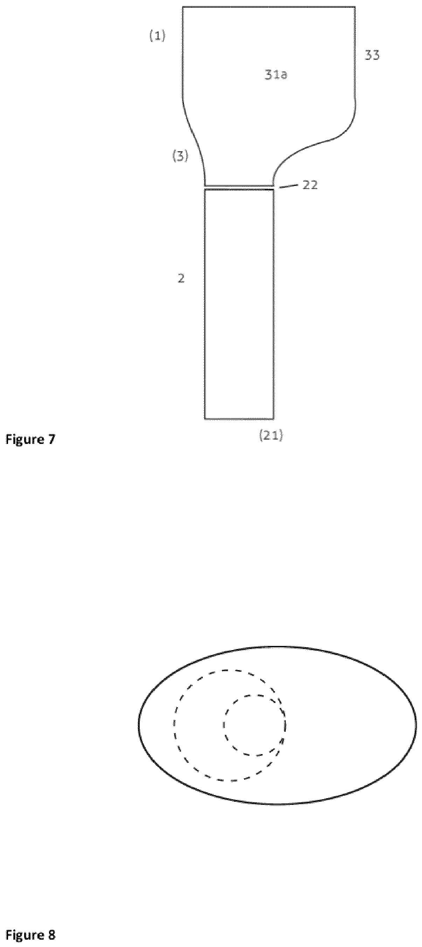

Figure 1 presents a schematic representation in side cut view through a vertical symmetry plane, of a system (1) of prosthetic supplements for dental implants according to the invention. A dental implant of a system (1) of prosthetic supplements for dental implants, such as known in prior art, presents a first implant part, hereinafter designated by implant support (2) that is provided in an elongated format of substantially cylindrical type, including a respective support base (21) and support top (22), and a second implant part, hereinafter designated by implant pillar (3), that is provided on the top of the implant support (3). The implant pillar (3) is usually provide with a base element (31) provided with a cross section that corresponds substantially to the cross section of the support top (22) so as to better engage with the implant support (2) arranged below thereof, and with a retention element (32) provided to engage with a prosthetic crown (8) arranged above thereof. Figure 7 presents the version whereby the implant pillar (3) and a prosthetic crown (8) arranged above are provided as a single device.

Figures 2 and 8 show the implant support (2) ad the implant pillar (3) in top views.

As one can observe from Figures 1, 2, 7 e 8, the implant pillar (3) according to the present invention is preferentially provided with a symmetry profile (identified by A-A') and with an asymmetric cross section, in particular including an emerging profile (33) on one side.

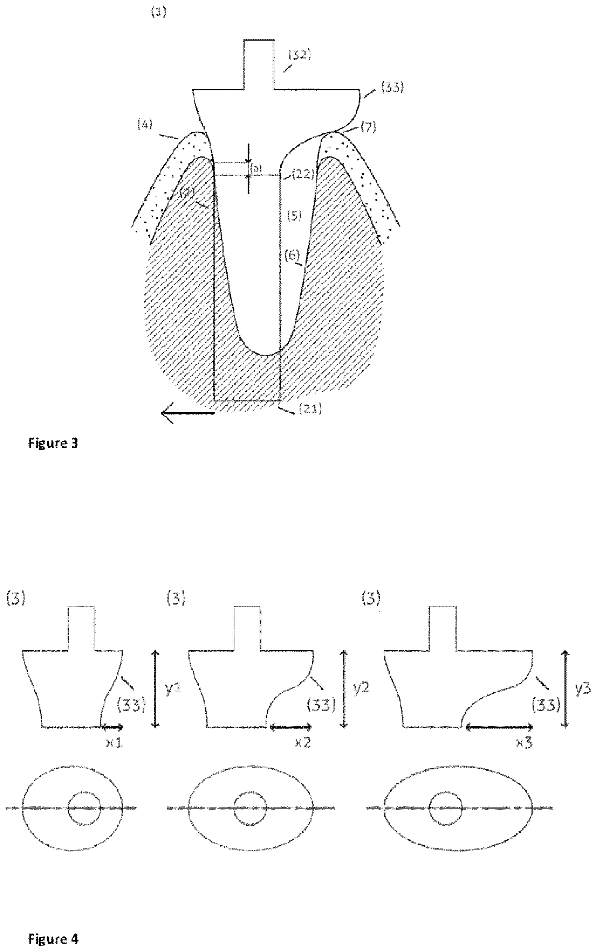

Figure 3 presents a schematic representation of a dental alveolus (4) in front view relative to the interior of the mouth cavity, in particular signaling the general configuration and structure of soft and hard tissues. In particular, there is identified an exterior zone of soft tissues (with dotted shadowing) and a zone of hard tissues (with dashed shadowing) that surround the alveolar cavity. In the drawing there can further be recognized the alveolar wall zone (6) and the edge zone of the dental alveolus (4), hereinafter designated by alveolar crest (7).

As it can be observed, the dental implant according to the system (1) of prosthetic supplements for dental implants according to the present invention is provided so that there results a free alveolar space (5) disposed on the exterior side of the dental alveolus (4) relative to the mouth cavity. This free alveolar space (5) corresponds to at least a fraction of the volume of the dental alveolus (4), including a fraction of substantially laminar format.

According to an inventive aspect, the implant support (2) is provided, including dimensioned and configured, so that the support base (21) engages in part of the alveolar wall (6) and of the alveolus base, and the support top (22) remains arranged somewhat below, preferentially at a distance (a) of between 1 mm to 4 mm, particularly preferred at about 2 mm from the proximal bone crest.

In particular, it is preferred when said free alveolar space (5) develops along most part of the alveolar wall (6) that is in each case on the exterior side with relation to the mouth cavity, thereby providing better conditions for the development of the healing clot.

According to the inventive aspect, the support pillar (3) presents an emerging profile (33) at least in the zone that is disposed on the exterior side of the dental alveolus (4) with relation to the mouth cavity, whereby this emerging profile (33) is configured so as to closed said free alveolar space (5), thereby exerting the least pressure and with the least proximity surface relative to the alveolar crest (7). Said emerging profile (33) is configured in a curved form, including a convex part and a concave part, so as to maximize the free alveolar space (5) in the zone of the alveolar crest (7), and to minimize the pressure exerted and the respective contact surface with said alveolar crest (7). In this sense, different embodiments of this emerging profile (33) are possible, notably in view of different characteristics and dimensions of the dental alveolus (4) being considered.

Figure 4 presents schematic representations, in side cut view above, and in top view below, of three implant pillars (3) of a (1) of prosthetic supplements for dental implants according to the invention. As indicated, the implant pillars (3) for immediate placement of a prosthetic crown present an emerging profile (33) that develops along different dimensions (x, y). These dimensions (x, y) are previously defined in view of a set of parameters generally associated with the general conditions and representative of the majority of dental alveolus (4).

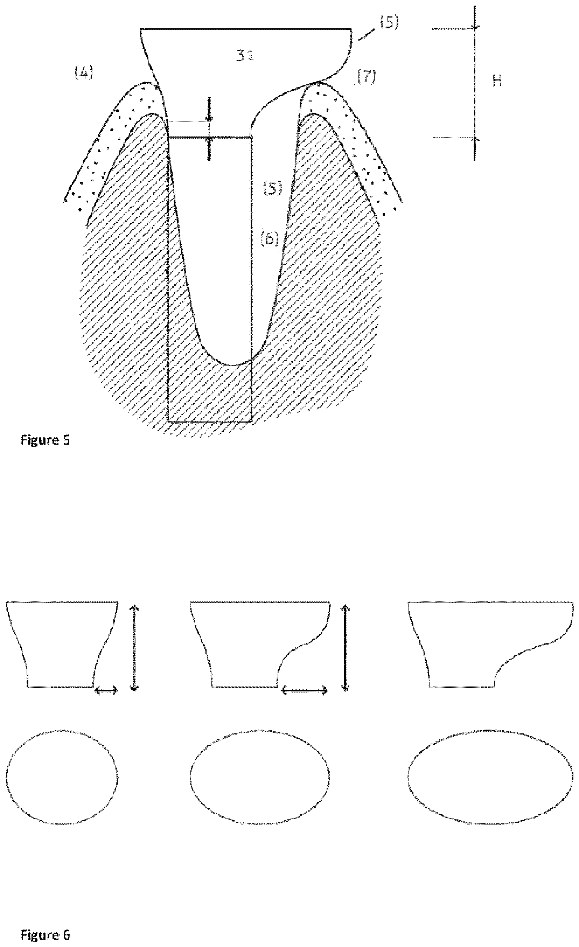

Figure 5 presents a schematic representation of a dental alveolus (4) in front view with relation to the interior of the mouth cavity, in particular thereby signaling the general configuration and the structure of soft and hard tissues. In this figure there is represented the embodiment of prosthetic supplement adapted for use without immediate placement of the prosthetic crown. The dimension h is previously defined in view of a set of parameters generally associated with general conditions, and representative of a majority of said dental alveolus (4) as a function of a height that should always be more coronal above of the gingival limit.

Figure 6 presents schematic representations, in side cut view above, and in top view below, of three implant pillars (3) of a system (1) of prosthetic supplements for dental implants according to the invention, in the embodiment whereby there is not placed a prosthetic crown at the time of placing the dental implant.

## Claims

1. System (1) of prosthetic supplements for dental implants that present an implant support (2) and an implant pillar (3) provided so as to engage each other and in a respective dental alveolus (4), wherein the implant support (2) and the implant pillar (3) are provided so that a free alveolar space (5) results on the exterior side of the dental alveolus (4) with relation to the mouth cavity,
wherein the implant pillar (3) presents a base element (31), wherein said base element (31) presents an asymmetric cross section and presents an emerging profile (33) in at least part of the side face,
wherein said implant pillar (3) presents said emerging profile (33) with a contour including a first profile zone provided in a concave configuration, and a second profile zone provided in a convex configuration, the first and second zones of the emerging profile (33) are provided in a continuous curved configuration, so that the interaction with the edge of the alveolar crest (7) is done, in at least most part of its extension, by the convex zone of the emerging profile (33), and said emerging profile (33) develops along at least most part of the exterior surface of the base element (31), and along at least most part of half the cross section of the base element (31), and
wherein said emerging profile (33) develops along an extension (x) and a height (y), whereby the dimensions and/or the relation between the extension (x) and the height (y) of the emerging profile (33) are determined as a function of the dimensions and/or of the type of a respective dental alveolus (4), and the relation between the extension (x) and the height (y) of the emerging profile (33) is in the interval between 0,5:1 up to 1:1.

2. System (1) according to claim 1, **characterized in that** said implant pillar (3) presents a base element (31) and a retention element (32) adapted for engagement with an implant crown (8).

3. System (1) according to claims 1 to 2, **characterized in that** said implant pillar (3) presents a base element (31) configured so that it elevates between 1 to 6 mm, preferentially between 2 to 4 mm, above of the edge of the alveolar crest (7) and does not present a retention element (32).

4. System (1) according to any of the previous claims, **characterized in that** it includes at least two, preferentially at least four dental implants that present different implant supports (2) and/or implant pillars (3), including respective emerging profiles (33), provided so that they correspond to the generality of the dimensions and/or types of dental alveolus (4) at least for a given age group or a given animal species.

5. System (1) according to any of the previous claims, **characterized in that** said implant pillar (3) is produced in a single piece, preferentially by means of molding or tridimensional milling.

6. System (1) according to any of the previous claims, **characterized in that** said implant pillar (3) is produced in zirconium, or a material presenting similar physical and chemical properties.

7. System (1) according to any of the previous claims, **characterized in that** it is provided for use in immediate dental implants or in dental implants placed in healed bone crests.

## Patentansprüche

1. System (1) von prosthetischen Ergänzungen für Zahnimplantate, die eine Implantatabstützung (2) und einen Zahnpfeiler (3) aufweist so vorhanden, um miteinander und in einer entsprechenden Zahnalveole (4) zu kuppeln, wobei die Implantatabstürzung (2) und der Zahnpfeiler (3) so vorhanden sind, um ein freies Alveolarbereich (5) auf der Außenseite der Zahnalveole (4) bzgl. der Mundhöhle zu erzeugen,
wobei der Implantatpfeiler (3) ein Grundelement (31) aufweist, wobei genanntes Grundelement (31) einen ungleichförmigen Querschnitt und ein Wachstumsprofil (33) in mindestens teilweise der Seitenfläche aufweist,
wobei genannter Implantatpfeiler (3) genanntes Wachstumsprofil (33) mit einem Umriss einschließlich ein erstes Profilbereich aufweist, vorhanden in einer Höhlengestaltung, und ein zweites Profilbereich vorhanden in einer gewölbten Gestaltung, die ersten und zweiten Bereiche vom Wachstumsprofil (33) sind in einer laufend gebogenen Gestaltung vorhanden, so dass die Wechselwirkung mit dem Winkel des Alveolarkamms (7) ausgeführt wird, mindestens meistenteils seiner Verlängerung, beim gewölbten Bereich des Wachstumsprofils (33), und genanntes Wachstumsprofil (33) entwickelt sich entlang mindestens meistenteils der Außenseite des Grundelements (31) und entlang mindestens meistenteils der Hälfte des Kreuzschnitts des Grundelements (31), und
wobei sich genanntes Wachstumsprofil (33) entlang einer Verlängerung (x) und einer Höhe (y) entwickelt, wobei die Dimensionen und/ oder die Beziehung zwischen der Verlängerung (x) und der Höhe (y) des Wachstumsprofiles (33) als Funktion der Dimensionen und/ oder des Typs der entsprechenden Zahnalveole (4) bestimmt werden, und die Beziehung zwischen der Verlängerung (x) und der Höhe (y) des Wachstumsprofils (33) innerhalb des Zeitraumes zwischen 0,5:1 bis zu 1:1 ist.

2. System (1) gemäß Anspruch 1 **dadurch gekennzeichnet, dass** genannter Implantatpfeiler (3) ein Grundelement (31) und ein Halteelement (32) angepasst zur Kupplung mit einer Implantatkrone (8) aufweist.

3. System (1) gemäß Ansprüche 1 bis 2 **dadurch gekennzeichnet, dass** genannter Implantatpfeiler (3) ein Grundelement (31) aufweist so gestaltet, um zwischen 1 und 6 mm, vorzugsweise zwischen 2 und 4 mm, oberhalb des Winkels des Alveolarkamms (7) zu erheben und kein Halteelement (32) darzustellen.

4. System (1) gemäß einer der vorigen Ansprüche **dadurch gekennzeichnet, dass** es mindestens zwei, vorzugsweise mindestens vier Zahnimplantate umfasst, die unterschiedliche Implantatabstützungen (2) und/oder Implantatpfeiler (3) aufweisen, einschließlich entsprechende Wachstumsprofile (33) so versorgt, um einer Allgemeinheit der Dimensionen und/ oder Typen von Zahnalveolen (4) mindestens einer vorgegebenen Altersgruppe oder Tierarten zu entsprechen.

5. System (1) gemäß einer der vorigen Ansprüche **dadurch gekennzeichnet, dass** genannter Implantatpfeiler (3) in einem Einzelstück hergestellt wird, vorzugsweise mittels eines Gipsabdruckes oder eines dreidimensionalen Fräasen.

6. System (1) gemäß einer der vorigen Ansprüche **dadurch gekennzeichnet, dass** genannter Implantatpfeiler (3) in Zirkonium oder einem Material aufweisend ähnliche physische und chemische Eigenschaften hergestellt wird.

7. System (1) gemäß einer der vorigen Ansprüche **dadurch gekennzeichnet, dass** es zur Anwendung in sofortigen Zahnimplantaten vorhanden ist oder in Zahnimplantaten angeordnet in geheilten Kieferkämmen.

## Revendications

1. Système (1) de suppléments prothétiques pour les implants dentaires qui présentent un support d'implant (2) et un pilier d'implant (3), fournis afin de s'engager l'un avec l'autre et dans une alvéole dentaire respective (4), où le support d'implant (2) et le pilier d'implant (3) sont fournis afin qu'un espace alvéolaire libre (5) résulte sur le côté extérieur de l'alvéole dentaire (4) par rapport à la cavité buccale,
où le pilier d'implant (3) présente un élément de base (31), où ledit élément de base (31) présente une section en croix asymétrique et présente un profil émergeant (33) dans au moins une partie de la face latérale,
où ledit pilier d'implant (3) présente ledit profil émergeant (33) avec un contour, y compris une première zone de profile fournie dans une configuration concave et une seconde zone de profile fournie dans une configuration convexe, la première et seconde zones du profile émergeant (33) sont fournies dans une configuration recourbée continue, afin que l'interaction avec le bord de la crête alvéolaire (7) soit effectuée, dans au moins une partie de son extension, par la zone convexe du profile émergeant (33) et ledit profil émergeant (33) se développe le long d'au moins une partie de la surface extérieure de l'élément de base (31) et le long d'au moins une partie de la moitié de la section en croix de l'élément de base (31), et
où ledit profil émergeant (33) se développe le long d'une extension (x) et d'une hauteur (y), où les dimensions et/ou la relation entre l'extension (x) et la hauteur (y) du profile émergeant (33) sont déterminés comme une fonction des dimensions et/ou du type de l'alvéole dentaire respective (4) et la relation entre l'extension (x) et la hauteur (y) du profile émergeant (33) est dans l'intervalle compris entre 0,5:1 et 1:1.

2. Système (1) selon la revendication 1, **caractérisé par le fait que** le pilier de l'implant (3) présente un élément de base (31) et un élément de rétention (32) adaptés à l'engagement avec une couronne d'implant (8).

3. Système (1) selon les revendications 1 et 2, **caractérisé par le fait que** le pilier d'implant (3) présente un élément de base (31) configuré pour qu'il s'élève entre 1 et 6 mm, de préférence entre 2 et 4 mm, au-dessus du bord de la crête alvéolaire (7) et il ne présente pas un élément de rétention (32) .

4. Système (1) selon une quelconque revendication précédente, **caractérisé par le fait qu'**il inclut au moins deux, de préférence au moins quatre implants dentaires présentant des supports d'implant différents (2) et/ou des piliers d'implant (3), y compris des profiles émergeant respectifs (33), fournis afin qu'ils correspondent à la généralité des dimensions et/ou des types d'alvéole dentaires (4) au moins, d'un groupe d'âge déterminé ou d'espèces animales déterminées.

5. Système (1) selon une quelconque revendication précédente, **caractérisé par le fait que** ledit pilier d'implant (3) est produit dans une pièce unique, de préférence au moyen de moulage ou de fraisage tridimensionnel.

6. Système (1) selon une quelconque revendication précédente, **caractérisé par le fait que** ledit pilier d'implant (3) est produit en zirconium ou dans un matériel présentant des propriétés chimiques et physiques similaires.

7. Système (1) selon une quelconque revendication précédente **caractérisé par le fait qu'**il est fourni pour l'usage d'implants dentaires immédiats ou dans des implants dentaires placés dans des crêtes osseuses guéries.
